# EUROPÄISCHE PATENTSCHRIFT

(11) **EP 3 108 213 B1**
(45) Veröffentlichungstag und Bekanntmachung des Hinweises auf die Patenterteilung: **21.02.2018**
(21) Anmeldenummer: 14819000.2
(22) Anmeldetag: 22.12.2014
(51) Int. Cl.: G01F 15/14, G01F 1/684, G01F 1/692

(54) **SENSORANORDNUNG ZUR BESTIMMUNG WENIGSTENS EINES PARAMETERS EINES DURCH EINEN KANAL STRÖMENDEN FLUIDEN MEDIUMS**
SENSOR ARRANGEMENT FOR THE DETERMINATION OF AT LEAST ONE PARAMETER OF A FLUID FLOWING IN A CHANNEL
DISPOSITION DE CAPTEUR POUR LA DÉTERMINATION D'AU MOINS UN PARAMÈTRE D'UN FLUIDE CIRCULANT DANS UN CANAL

(30) Priorität: 17.02.2014 DE 102014202853
(43) Veröffentlichungstag der Anmeldung: 28.12.2016
(73) Patentinhaber: Robert Bosch GmbH, 70442 Stuttgart (DE)
(72) Erfinder: MAIS, Torsten, 71636 Ludwigsburg (DE); WAGNER, Ulrich, 80689 München (DE); KAUFMANN, Andreas, 89567 Sontheim an der Brenz (DE); BEYRICH, Hans, 71691 Freiberg/N (DE)
(86) Internationale Anmeldenummer: PCT/EP2014/078978
(87) Internationale Veröffentlichungsnummer: WO 2015/120936

(56) Entgegenhaltungen:
- WO-A1-2010/102403
- DE-A1-102011 005 768
- US-A1- 2002 078 744
- US-A1- 2004 055 376

## Beschreibung

### Stand der Technik

Aus dem Stand der Technik sind zahlreiche Verfahren und Vorrichtungen zur Bestimmung wenigstens einer Strömungseigenschaft fluider Medien, also von Flüssigkeiten und/oder Gasen, bekannt. Bei den Strömungseigenschaften als möglichem Parameter kann es sich dabei um beliebige physikalische und/oder chemische messbare Eigenschaften handeln, welche eine Strömung des fluiden Mediums qualifizieren oder quantifizieren. Insbesondere kann es sich dabei um eine Strömungsgeschwindigkeit und/oder einen Massenstrom und/oder einen Volumenstrom handeln.
Die Erfindung wird im Folgenden insbesondere unter Bezugnahme auf so genannte Heißfilmluftmassenmesser beschrieben, wie sie beispielsweise aus Konrad Reif (Hrsg.): Sensoren im Kraftfahrzeug, 1. Auflage 2010, Seiten 146-148, bekannt sind. Derartige Heißfilmluftmassenmesser basieren in der Regel auf einem Sensorchip, insbesondere einem Silizium-Sensorchip, beispielsweise mit einer Sensormembran als Messoberfläche oder Sensorbereich, welcher von dem strömenden fluiden Medium überströmbar ist. Der Sensorchip umfasst in der Regel mindestens ein Heizelement sowie mindestens zwei Temperaturfühler, welche beispielsweise auf der Messoberfläche des Sensorchips angeordnet sind, wobei der eine Temperaturfühler stromaufwärts des Heizelements und der andere Temperaturfühler stromabwärts des Heizelements gelagert ist. Aus einer Asymmetrie des von den Temperaturfühlern erfassten Temperaturprofils, welches durch die Strömung des fluiden Mediums beeinflusst wird, kann auf einen Massenstrom und/oder Volumenstrom des fluiden Mediums geschlossen werden. Heißfilmluftmassenmesser sind üblicherweise als Steckfühler ausgestaltet, welcher fest oder austauschbar in ein Strömungsrohr einbringbar ist. Beispielsweise kann es sich bei diesem Strömungsrohr um einen Ansaugtrakt einer Brennkraftmaschine handeln.

Dabei durchströmt ein Teilstrom des Mediums wenigstens einen in dem Heißfilmluftmassenmesser vorgesehen Hauptkanal. Zwischen dem Einlass und dem Auslass des Hauptkanals ist ein Bypasskanal ausgebildet. Insbesondere ist der Bypasskanal derart ausgebildet, dass er einen gekrümmten Abschnitt zur Umlenkung des durch den Einlass des Hauptkanals eingetretenen Teilstroms des Mediums aufweist, wobei der gekrümmte Abschnitt im weiteren Verlauf in einen Abschnitt übergeht, in welchem der Sensorchip angeordnet ist. Der zuletzt genannte Abschnitt stellt den eigentlichen Messkanal dar, in dem der Sensorchip angeordnet ist.

Derartige Heißfilmluftmassenmesser müssen in der Praxis einer Vielzahl von Anforderungen genügen. Neben dem Ziel, einen Druckabfall an dem Heißfilmluftmassenmesser insgesamt durch geeignete strömungstechnische Ausgestaltungen zu verringern, besteht eine der hauptsächlichen Herausforderungen darin, die Signalqualität sowie die Robustheit der Vorrichtungen gegenüber Kontamination durch Öl- und Wassertöpfchen sowie Ruß-, Staub- und sonstigen Festkörperpartikeln weiter zu verbessern. Diese Signalqualität bezieht sich beispielsweise auf einen Massenstrom des Mediums durch den zu dem Sensorchip führenden Messkanal sowie gegebenenfalls auf die Verminderung einer Signaldrift und die Verbesserung des Signal-zu-Rauschen-Verhältnisses. Die Signaldrift bezieht sich dabei auf die Abweichung beispielsweise des Massenstroms des Mediums im Sinne einer Veränderung der Kennlinien-Beziehung zwischen dem tatsächlich auftretenden Massenstrom und dem im Rahmen der Kalibrierung bei der Fertigung ermittelten auszugebenden Signal. Bei der Ermittlung des Signal-zu-Rauschen-Verhältnisses werden die in schneller zeitlicher Folge ausgegebenen Sensorsignale betrachtet, wohingegen sich die Kennlinien- oder Signaldrift auf eine Veränderung des Mittelwertes bezieht.

Bei herkömmlichen Heißfilmluftmassenmessern der beschriebenen Art ragt in der Regel ein Sensorträger mit einem darauf angebrachten oder eingebrachten Sensorchip in den Messkanal hinein. Beispielsweise kann der Sensorchip in den Sensorträger eingeklebt oder auf diesen aufgeklebt sein. Der Sensorträger kann beispielsweise mit einem Bodenblech aus Metall, auf welchem auch eine Elektronik, eine Ansteuer- und Auswerteschaltung (beispielsweise mit einem Schaltungsträger, insbesondere einer Leiterplatte) aufgeklebt sein kann, eine Einheit bilden. Beispielsweise kann der Sensorträger als angespritztes Kunststoffteil eines Elektronikmoduls ausgestaltet sein. Der Sensorchip und die Ansteuer- und Auswerteschaltung können beispielsweise durch Bondverbindungen miteinander verbunden werden. Das derart entstandene Elektronikmodul kann beispielsweise in ein Sensorgehäuse eingeklebt werden und der gesamte Steckfühler kann mit Deckeln verschlossen werden.
Die DE 10 2011 005 768 A1 beschreibt eine Vorrichtung zur Erfassung mindestens einer Eigenschaft eines fluiden Mediums, welches mindestens ein in das fluide Medium einbringbares Sensorgehäuse aufweist. Das Sensorgehäuse weist mindestens einen von dem fluiden Medium durchströmbaren Kanal auf, welcher mindestens eine Auslassöffnung aufweist. Das fluide Medium kann nach Durchströmen des Kanals durch die Auslassöffnung ausströmen. Das Sensorgehäuse weist mindestens einen Gehäusekörper und mindestens einen Deckel auf. Die Auslassöffnung ist in dem Deckel angeordnet. Der Gehäusekörper weist mindestens einen in die Auslassöffnung eingreifenden Kragenabschnitt auf, welcher zumindest einen Teil eines Rands der Auslassöffnung bildet. Die US 2002/0078744 A1 beschreibt eine Sensoranordnung zur Bestimmung des Durchflusses eines durch einen Kanal strömenden fluiden Mediums gemäß der Präambel des unabhängigen Anspruchs 1.

Trotz der zahlreichen Vorteile der aus dem Stand der Technik bekannten Vorrichtungen beinhalten diese noch Verbesserungspotenzial bezüglich funktionaler Aspekte. So weisen derartige Vorrichtungen üblicherweise ein Elektronikmodul auf, das in einem Elektronikraum des Sensorgehäuses untergebracht ist. Das Elektronikmodul, der übrige Bereich des Sensorgehäuses, in dem der Kanal ausgebildet ist, und der Deckel sind so konstruiert, dass sich der eine Teil des Sensorträgers mit dem Sensorchip im umströmten Bereich des Kanals befindet. Der andere Teil mit der Elektronik ist geschützt vor Außeneinwirkungen im Elektronikraum des Sensorgehäuses angeordnet. Die Bereiche sind durch ein Klebeschwert am Deckel getrennt, welches sich über der Mitte des Sensorchips befindet. Dabei ist die Passung von Deckel und Gehäusekörper des Sensorgehäuses mitunter nicht eindeutig definiert. Da der Deckel und der Gehäusekörper üblicherweise aus Spritzwerkzeugen mit mehreren Kavitäten stammen, streuen die tatsächlichen Abmessungen des Deckels und des Gehäusekörpers. Folglich ist die sich ergebende relative Lage des Deckels zu dem Gehäusekörper Schwankungen unterworfen. Die Lagetoleranzen des Deckels wiederum führen zu Varianz im Kennlinienverhalten, die im Abgleichprozess kompensiert werden muss.

### Offenbarung der Erfindung

Es wird daher eine Sensoranordnung zur Bestimmung wenigstens eines Parameters eines durch einen Kanal strömenden fluiden Mediums gemäss Anspruch 1 vorgeschlagen, welche die Nachteile bekannter Verfahren und Strategien zumindest weitgehend vermeiden kann und bei der immer eine exakt gleich vorgegebene Position des Kanals gegenüber dem Gehäusekörper und insbesondere gegenüber der Position des Sensorchips gewährleistet wird.

Die Sensoranordnung zur Bestimmung wenigstens eines Parameters eines durch einen Kanal strömenden fluiden Mediums, insbesondere eines Ansaugluftmassenstroms einer Brennkraftmaschine, umfasst ein Sensorgehäuse, insbesondere einen in ein Strömungsrohr eingebrachten oder einbringbaren Steckfühler, in dem der Kanal ausgebildet ist, und mindestens einen in dem Kanal angeordneten Sensorchip zur Bestimmung des Parameters des fluiden Mediums, wobei das Sensorgehäuse einen Gehäusekörper und einen Deckel aufweist. Der Kanal weist einen Einlass in den Kanal, der einer Hauptströmungsrichtung des fluiden Mediums entgegenweist, und mindestens einen Auslass aus dem Kanal auf. Der Kanal ist in dem Deckel ausgebildet und der Deckel ist mit dem Gehäusekörper mittels einer kraftschlüssigen Verbindung verbunden.

Die kraftschlüssige Verbindung kann beispielsweise eine Presspassung sein. Der Deckel kann eine Aufnahme aufweisen. Der Gehäusekörper kann einen Vorsprung aufweisen. Der Vorsprung kann zum Ausbilden der kraftschlüssigen Verbindung in die Aufnahme eingreifen. Der Vorsprung kann in einer ersten Erstreckungsrichtung von dem Gehäusekörper vorstehen. Der Vorsprung kann eine dreieckige Querschnittsfläche bei einem Querschnitt senkrecht zu der ersten Erstreckungsrichtung gesehen aufweisen. Der Deckel kann mindestens eine deckelseitige Auflagefläche aufweisen. Der Gehäusekörper kann mindestens eine gehäusekörperseitige Auflagefläche aufweisen. Die deckelseitige Auflagefläche und die gehäusekörperseitige Auflagefläche können sich berühren. Ein erster Abstand von dem Vorsprung zu der gehäusekörperseitigen Auflagefläche kann kleiner sein als ein zweiter Abstand von der Aufnahme zu der deckelseitigen Auflagefläche. Der Deckel kann mindestens drei deckelseitige Auflageflächen aufweisen. Der Gehäusekörper kann mindestens drei gehäusekörperseitige Auflageflächen aufweisen. Jeweils eine deckelseitige Auflagefläche kann eine gehäusekörperseitige Auflagefläche berühren. Dadurch wird eine Dreipunktauflage geschaffen. Der Vorsprung kann in der Aufnahme plastisch verformt sein. Der Vorsprung kann im Wesentlichen senkrecht von dem Gehäusekörper vorstehen. Das Sensorgehäuse kann weiter einen Elektronikraum aufweisen. Der Sensorchip kann auf einem Sensorträger angeordnet sein, der sich von dem Elektronikraum aus in einer zweiten Erstreckungsrichtung in den Kanal hinein erstreckt. Der Vorsprung kann dem Elektronikraum gegenüberliegend mit dem Kanal dazwischen in der Erstreckungsrichtung angeordnet sein. Der Vorsprung kann sich senkrecht zu der Erstreckungsrichtung erstrecken.

Unter der Hauptströmungsrichtung ist im Rahmen der vorliegenden Erfindung die lokale Strömungsrichtung des fluiden Mediums am Ort des Sensors bzw. der Sensoranordnung zu verstehen, wobei beispielsweise lokale Unregelmäßigkeiten, wie z. B. Turbulenzen, unberücksichtigt bleiben können. Insbesondere kann unter der Hauptströmungsrichtung somit die lokale gemittelte Transportrichtung des strömenden fluiden Mediums am Ort der Sensoranordnung verstanden werden. Dabei bezieht sich die gemittelte Transportrichtung auf eine Transportrichtung, in der das fluide Medium im zeitlichen Mittel überwiegend strömt.

Unter einem Gehäusekörper und einem Deckel sind dabei im Rahmen der vorliegenden Erfindung mindestens zwei Bauteile des Sensorgehäuses zu verstehen, welche zusammenwirken und welche beispielsweise in einem unmittelbaren Kontakt stehen. Erfindungsgemäß wird vorgeschlagen, einen kraftschlüssigen Kontakt zwischen diesen vorzusehen. Zusätzlich ist eine formschlüssige und/oder eine stoffschlüssige Verbindung möglich ist.

Unter einer kraftschlüssigen Verbindung ist im Rahmen der vorliegenden Erfindung eine Verbindungen zu verstehen, bei der eine Normal-Kraft auf die miteinander zu verbindenden Flächen wirkt. Eine gegenseitige Verschiebung der zu verbindenden Flächen ist verhindert, solange die durch die Haftreibung bewirkte Gegen-Kraft nicht überschritten wird. Der Kraft- beziehungsweise Reibschluss ist verloren und die Flächen rutschen aufeinander, wenn die tangential wirkende Last-Kraft größer als die Haftreibungs-Kraft ist, so zum Beispiel zwischen Rad und Schiene oder Straßenbelag bei Fahrzeugen mit eigenem Antrieb. Entsprechend sind kraftschlüssige Verbindungen im Rahmen der vorliegenden Erfindung solche Verbindungen, bei denen die einer Kraft zum Verschieben der zu verbindenden Bauteile relativ zueinander entgegenwirkende Haftreibung größer als die Kraft zum Verschieben ist. Die kraftschlüssige Verbindung kann insbesondere aber nicht ausschließlich eine Presspassung sein.

Unter einer Presspassung ist im Rahmen der vorliegenden Erfindung eine Passung zu verstehen, bei der am aus den Verbindungspartnern gefertigten Bauteil ein Übermaß vorliegt. Als Passung wird die maßliche Beziehung zwischen zwei gepaarten, toleranzbehafteten Teilen bezeichnet, wobei beide Teile das gleiche Nennmaß aufweisen, jedoch Lage und Größe der Toleranzfelder unterschiedlich sein können. Eine Passung gibt immer eine Toleranz an, in der sich die Istmaße von Aufnahme, wie beispielsweise eine Bohrung, und darin einzubringendem Bauteil, wie beispielsweise ein Zapfen oder Dom, bewegen dürfen. Das Größtmaß der Aufnahme ist in jedem Fall kleiner als das Kleinstmaß des darin einzubringenden Bauteils.

Der Gehäusekörper und der Deckel können jeweils einteilig oder auch mehrteilig ausgestaltet sein. Unter einem Deckel ist dabei allgemein ein Bauteil des Sensorgehäuses zu verstehen, welches um die Auslassöffnung herum eine dem fluiden Medium außerhalb des Sensorgehäuses zuweisende Oberfläche bildet. Der Gehäusekörper ist hingegen ein Bauelement, welches im Bereich der Auslassöffnung auf der dieser Oberfläche gegenüberliegenden Seite des Sensorgehäuses angeordnet ist. Erfindungsgemäß wird vorgeschlagen, den mindestens einen Kanal in dem Deckel auszubilden. Der Gehäusekörper und/oder der Deckel können beispielsweise ganz oder teilweise aus einem Kunststoffmaterial hergestellt sein, wobei jedoch, alternativ oder zusätzlich, auch die Verwendung anderer Materialien möglich ist, beispielsweise keramischer und/oder metallischer Materialien. Der Gehäusekörper und der Deckel können beispielsweise Bestandteil eines Steckfühlers sein.

Die Auslassöffnung kann grundsätzlich einen beliebigen Querschnitt aufweisen, beispielsweise einen runden, ovalen, polygonalen oder auch schlitzförmigen Querschnitt. Die Auslassöffnung kann vorzugsweise auf einer Seitenfläche des Steckfühlers angeordnet sein, welche derart in dem Strömungsrohr angeordnet ist, dass diese vorzugsweise im Wesentlichen parallel zu einer Hauptströmungsrichtung ausgerichtet ist, also mit einer Abweichung von vorzugsweise nicht mehr als 20 °, insbesondere nicht mehr als 10 ° und besonders bevorzugt nicht mehr als 50 ° von einer parallelen Ausrichtung zur Hauptströmungsrichtung.

Weitere mögliche Ausgestaltungen betreffen den Kanal der Sensoranordnung. Dieser Kanal kann einteilig oder auch mehrteilig ausgestaltet sein. In dem Kanal kann insbesondere mindestens ein Sensorelement zur Erfassung des mindestens einen Parameters aufgenommen sein. Bei diesem Sensorelement kann es sich insbesondere um ein Heißfilmluftmassenmesser-Sensorelement handeln, beispielsweise einen Heißfilmluftmassenmesser-Sensorchip gemäß der obigen Beschreibung. Auch andere Ausgestaltungen sind jedoch alternativ oder zusätzlich möglich.

Der Kanal kann insbesondere mindestens einen Hauptkanal und mindestens einen von dem Hauptkanal abzweigenden Bypasskanal aufweisen. Das Sensorelement kann insbesondere in dem optionalen mindestens einen Bypasskanal angeordnet sein. Beispielsweise kann sich der Hauptkanal von einer stirnseitigen, stromaufwärts gelegenen Eintrittsöffnung zu der Austrittsöffnung erstrecken. Der Bypasskanal kann von dem Hauptkanal abzweigen und in einer oder mehreren Bypasskanal-Auslassöffnungen münden, welche beispielsweise ebenfalls auf einer Seitenfläche des Steckfühlers angeordnet sein können und/oder auf einer Kopfseite, welche am weitesten in das strömende fluide Medium hineinragt Auch andere Ausgestaltungen sind jedoch möglich.

Der Deckel kann insbesondere eine dem fluiden Medium zuweisende Außenseite aufweisen. Diese Außenseite kann beispielsweise dem fluiden Medium außerhalb des Sensorgehäuses, insbesondere in dem Strömungsrohr, zuweisen und kann beispielsweise von dem fluiden Medium in dem Strömungsrohr umströmt oder umspült werden. Der Kanal, beispielsweise der Hauptkanal, kann an der Auslassöffnung derart ausgestaltet sein, dass das aus der Auslassöffnung ausströmende fluide Medium in einem spitzen Winkel in das außerhalb des Sensorgehäuses mit der Hauptströmungsrichtung strömende fluide Medium mündet.

Der Deckel und der Gehäusekörper können Auflageflächen aufweisen, die eine relative Bewegung dieser Bauteile zueinander verhindern. Unter einer Auflagefläche ist im Rahmen der vorliegenden Erfindung eine Fläche eines ersten Bauteils, wie beispielsweise des Deckels, zu verstehen, bis zu der sich ein zweites Bauteil, wie beispielsweise der Gehäusekörper, relativ zu dem ersten Bauteil bewegen lässt.

Ein Grundgedanke der vorliegenden Erfindung ist, den Kanal in dem Deckel auszubilden. Der so geformte Deckel weist nicht nur die Aufgabe auf, das Gehäuse abzuschließen, sondern übernimmt auch die Leitung der Luftströmung. Um eine immer gleiche Position des Kanals gegenüber dem Gehäusekörper und vor allem gegenüber der Position des Sensorchips zu gewährleisten, muss der Deckel schon beim Aufsetzen in den Gehäusekörper in seine Endposition gebracht werden und darf diese nach dem Absetzen in keiner Art und Weise mehr verändern, wie beispielsweise bedingt durch Verdrehen oder Aufspringen.

Der Deckel wird immer in der gleichen Position im Gehäusekörper positioniert. Durch die kraftschlüssige Verbindung zwischen dem Deckel und dem Gehäusekörper, die beispielsweise durch einen Vorsprung in Form eines Klemmdoms realisiert wird, der in eine Aufnahme greift, übt der Klemmdom einen Druck aus. Durch diesen Druck wird der Deckel an die abgestimmten Auflageflächen im Gehäusekörper gedrückt und kann sich dadurch nicht mehr verschieben. Somit werden die im Herstellungsprozess zwangsläufig auftretenden Lagetoleranzen des Deckels minimiert und der Sensor kann bei gleicher Fertigungsausbeute mit einer enger tolerierten Kennlinie produziert werden. Bedingt durch die besonderen Funktionsflächen wird eine effektive Realisierung enger Lagetoleranzen ermöglicht, auch bei Kombinationen von Deckeln und Gehäusekörpern aus verschiedenen Werkzeugnestern. Da die Funktionsflächen auf sehr kleine Bereiche beschränkt sind, können diese mit geringem Aufwand so lange korrigiert werden, bis die gewünschte Passung erreicht ist.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine perspektivische Darstellung einer Sensoranordnung in einem unverschlossenen Zustand,
- Figur 2: eine perspektivische Darstellung eines Deckels der Sensoranordnung,
- Figur 3: eine vergrößerte perspektivische Darstellung eines Gehäusekörpers der Sensoranordnung,
- Figur 4: eine weitere perspektivische Darstellung des Deckels,
- Figur 5: eine weitere perspektivische Ansicht des Deckels,
- Figur 6: eine Schnittansicht des Sensorgehäuses zu Beginn eines Montageprozesses,
- Figur 7: eine Schnittansicht des Sensorgehäuses bei einem Zwischenschritt des Montageprozesses und
- Figur 8: eine Schnittansicht des Sensorgehäuses bei einem finalen Schritt des Montageprozesses.

### Ausführungsformen der Erfindung

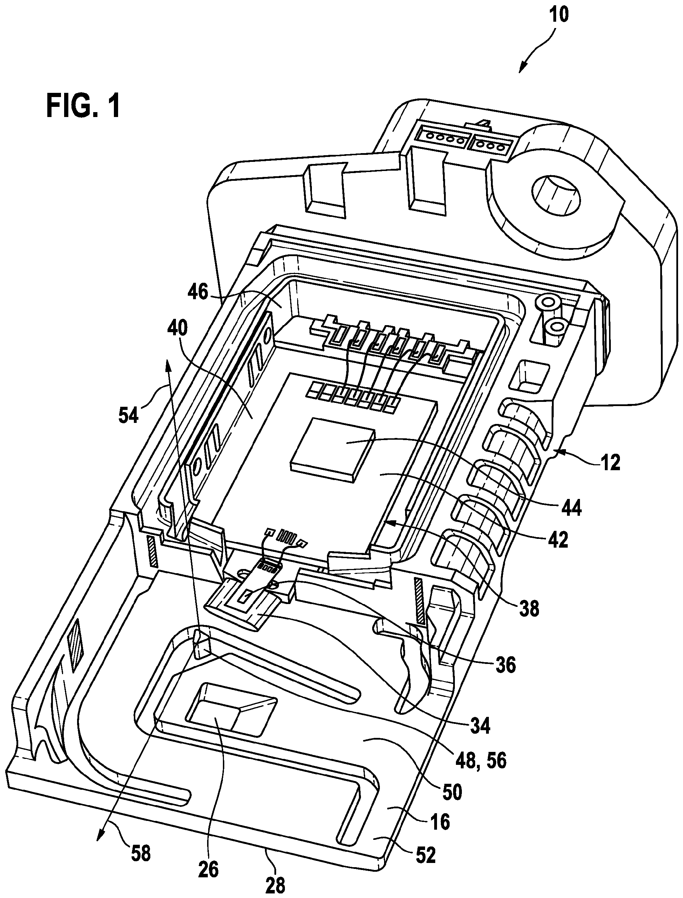

Figur 1 zeigt eine Sensoranordnung 10 zur Bestimmung eines Parameters eines durch einen Kanal strömenden fluiden Mediums. Die Sensoranordnung 10 ist in diesem Ausführungsbeispiel als Heißfilmluftmassenmesser ausgestaltet und kann insbesondere einen Ansaugluftmassenstrom einer Brennkraftmaschine erfassen. Bei diesem Ausführungsbeispiel umfasst die Sensoranordnung 10 ein Sensorgehäuse 12. Das Sensorgehäuse 12 ist als Steckfühler ausgebildete, welcher beispielsweise in ein Strömungsrohr, insbesondere einen Ansaugtrakt der Brennkraftmaschine, eingesteckt werden kann. In dem Sensorgehäuse 12 ist eine Kanalstruktur 14 ausgebildet, wie nachstehend ausführlicher erläutert wird. Das Sensorgehäuse 12 weist einen Gehäusekörper 16 und einen Deckel 18 auf.

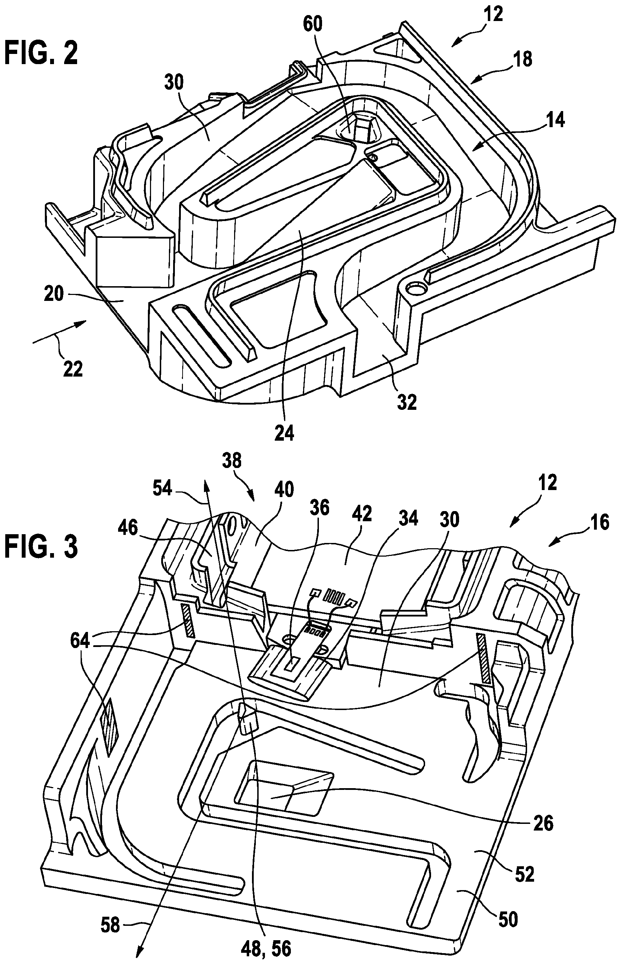

Figur 2 zeigt eine perspektivische Darstellung des Deckels 18. Die Kanalstruktur 14 ist in dem Deckel 18 ausgebildet. Durch die Kanalstruktur 14 kann über eine Einlassöffnung bzw. einen Einlass 20, der im eingesetzten Zustand einer Hauptströmungsrichtung 22 des fluiden Mediums entgegenweist, eine repräsentative Menge des fluidem Mediums strömen. Die Kanalstruktur 14 weist einen Hauptkanal 24 auf, welcher in einen Hauptkanalauslass 26 auf einer Unterseite 28 des Sensorgehäuses 12 und genauer des Gehäusekörpers 16 bezogen auf die Darstellung in Figur 1 mündet, sowie einen von dem Hauptkanal 24 abzweigenden Bypass- bzw. Messkanal 30, welcher in einen Messkanalauslass 32 des Messkanals 30 mündet.

Figur 3 zeigt eine vergrößerte perspektivische Darstellung des Gehäusekörpers 16. In den Messkanal 30 ragt wie bei herkömmlichen Luftmassenmessern ein Sensorträger 34 in Form eines Flügels. In diesem Sensorträger 34 ist ein Sensorchip 36 derart eingelassen, dass eine als Sensorbereich des Sensorchips 36 ausgebildete Sensormembran von dem fluiden Medium überströmt wird. Der Sensorträger 34 ist mit dem Sensorchip 36 Bestandteil eines Elektronikmoduls 38, das ein gebogenes Bodenblech 40 sowie eine darauf angebrachte, beispielsweise aufgeklebte, Leiterplatte 42 mit einer Ansteuer- oder Auswerteschaltung 44 aufweist. Der Sensorträger 34 kann beispielsweise als Kunststoffbauteil an das Bodenblech 40 angespritzt sein. Der Sensorträger 34, welcher beispielsweise als Spritzgussbauteil an das Bodenblech 40 angespritzt ist und dann mit dem Bodenblech 40 der Leiterplatte 42 integral ausgebildet sein kann, ist mit einer Anströmkante versehen, welche abgerundet ausgestaltet sein kann.

Der Sensorchip 36 ist mit der Ansteuer- und Auswerteschaltung 44 über elektrische Verbindungen, die als Drahtbonding ausgestaltet sein können, elektrisch verbunden. Das derart entstandene Elektronikmodul 38 wird in einen Elektronikraum 46 des Sensorgehäuses 12 und genauer des Gehäusekörpers 16 eingebracht, wie beispielsweise eingeklebt. Dies kann derart erfolgen, dass der Sensorträger 34 dabei in die Kanalstruktur 14 hineinragt, wie in den Figuren 1 und 3 gezeigt ist. Anschließend wird der Elektronikraum 46 durch einen nicht näher gezeigten Elektronikraumdeckel verschlossen.

Wie in Figur 3 gezeigt, weist der Gehäusekörper 16 einen Vorsprung 48 auf. Der Vorsprung 48 befindet sich in einem Deckelaufnahmeabschnitt 50 des Gehäusekörpers 16. Der Deckelaufnahmeabschnitt 50 ist zur Aufnahme des Deckels 18 ausgebildet. Mit anderen Worten ist der Deckelaufnahmeabschnitt 50 derjenige Abschnitt des Gehäusekörpers 16, in dem der Deckel 18 zum Bilden des Sensorgehäuses 12 montiert wird. Der Deckelaufnahmeabschnitt 50 befindet sich in einem vorderen Bereich 52 des Gehäusekörpers 16, d.h. demjenigen Bereich des Gehäusekörpers 16, der in dem fluiden Medium angeordnet wird. Der Vorsprung 48 steht in einer ersten Erstreckungsrichtung 54 von dem Gehäusekörper 16 in dem Deckelaufnahmeabschnitt 50 vor. Bei einem Querschnitt senkrecht zu der ersten Erstreckungsrichtung 54 gesehen weist der Vorsprung 48 eine dreieckige Querschnittsfläche auf. Beispielsweise ist der Vorsprung 48 als Dom 56 ausgebildet. Der Vorsprung 48 steht insbesondere senkrecht von dem Gehäusekörper 16 vor. In einem Zustand, in dem der Deckel 18 an dem Gehäusekörper 16 montiert ist, ist der Vorsprung 48 insbesondere dem Elektronikraum 46 gegenüberliegend mit dem Messkanal 30 dazwischen in einer zweiten Erstreckungsrichtung 58, in der sich der Sensorträger 34 in den Messkanal 30 hinein erstreckt, angeordnet. Der Vorsprung 48 erstreckt sich dabei senkrecht zu der zweiten Erstreckungsrichtung 58.

Wie in Figur 3 gezeigt eine perspektivische Ansicht des Deckels 18, in dem die Kanalstruktur 14 ausgebildet ist. Der Deckel 18 weist eine Aufnahme 60 für den Vorsprung 48 auf. Zum Bilden des Sensorgehäuses 12 ist der Deckel 18 mit dem Gehäusekörper 16 mittels einer kraftschlüssigen Verbindung verbunden, wie nachstehend näher erläutert wird. Diese kraftschlüssige Verbindung kann beispielsweise eine Presspassung sein. Zum Ausbilden der kraftschlüssigen Verbindung greift der Vorsprung 48 in die Aufnahme 60.

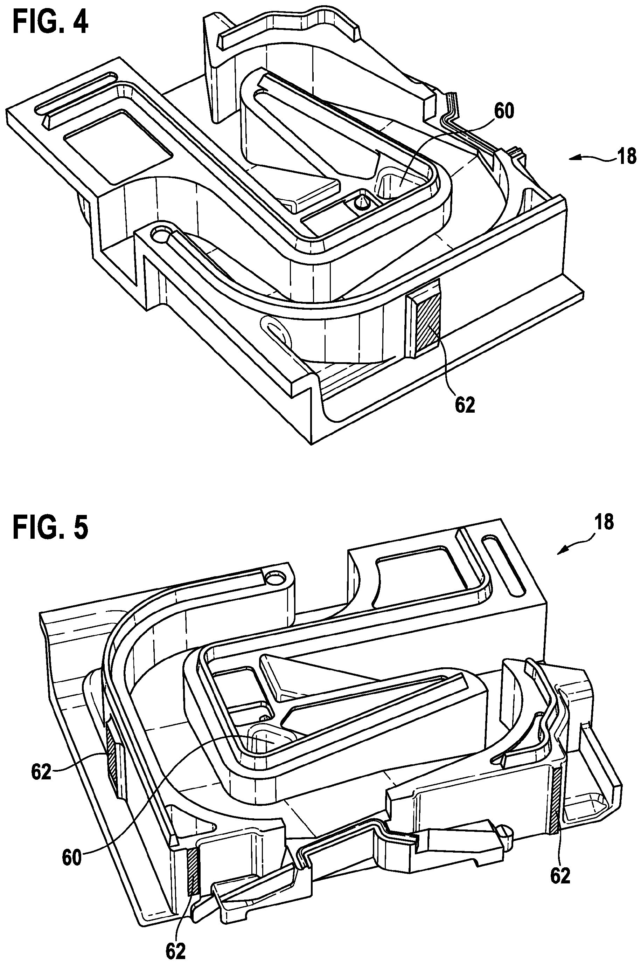

Figur 4 zeigt eine perspektivische Ansicht des Deckels 18 von seiner stromabwärtigen Seite. Figur 5 zeigt noch eine weitere perspektivische Ansicht des Deckels 18 von seiner dem Elektronikraum 46 zugewandten Seite. Der Deckel 18 weist mindestens eine deckelseitige Auflagefläche 62 auf. Beispielsweise weist der Deckel 18 mindestens drei deckelseitige Auflageflächen 62 auf. Der Gehäusekörper 16 weist mindestens eine gehäusekörperseitige Auflagefläche 64 auf. Beispielsweise weist der Gehäusekörper 16 drei gehäusekörperseitige Auflageflächen 64 auf. In einem montierten Zustand berühren die deckelseitigen Auflageflächen 62 die gehäusekörperseitigen Auflageflächen 64. Ein Abstand von dem Vorsprung 48 zu der gehäusekörperseitigen Auflagefläche 64 ist kleiner als ein zweiter Abstand von der Aufnahme 60 zu der deckelseitigen Auflagefläche 62. Dadurch wird eine Presspassung erreicht, die den Deckel 18 an seiner Position an dem Gehäusekörper 16 hält. Der maßliche Unterschied führt dazu, dass sich die Spitze des Vorsprungs 48 in der Gegenfläche der Aufnahme 60 am Deckel 18 verkrallt, wodurch sich der Deckel 18 nicht mehr verdrehen kann. Auch nach Erreichen der Position kann er nicht mehr zurückspringen bzw. sich verschieben, wie nachstehend noch näher erläutert wird.

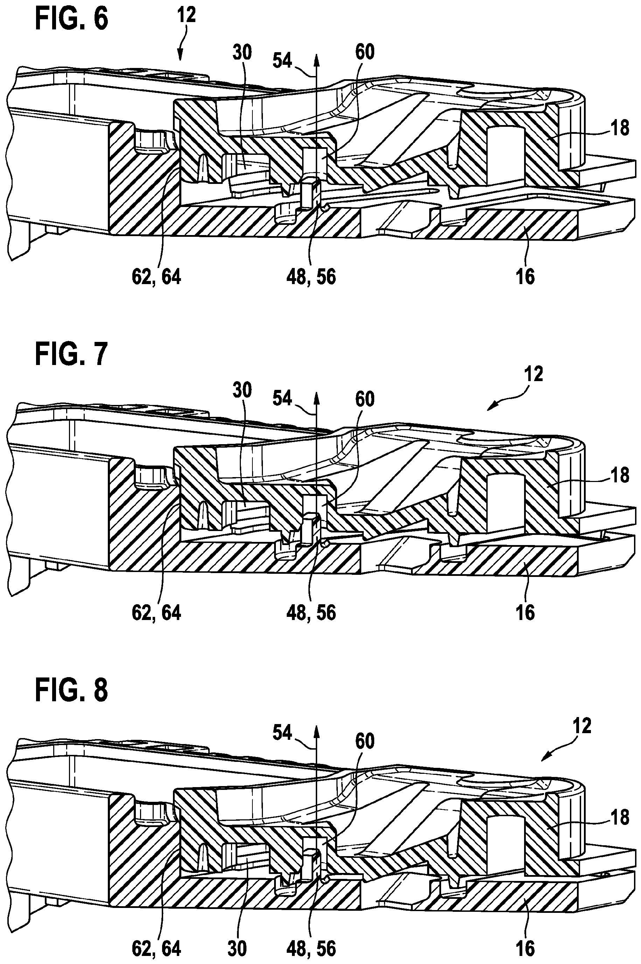

Nachfolgend wird anhand der Figuren 6 bis 8, die unterschiedliche Verfahrensschritte des Montageprozesses zum Herstellen der Sensoranordnung 10 bzw. zum Montieren des Deckels 18 an dem Gehäusekörper 16 zeigen, beschrieben. Figur 6 zeigt dabei eine Schnittansicht des Sensorgehäuses 12 zu Beginn des Montageprozesses. Figur 7 zeigt eine Schnittansicht des Sensorgehäuses 12 bei einem Zwischenschritt des Montageprozesses. Figur 8 zeigt eine Schnittansicht des Sensorgehäuses 12 bei einem finalen Schritt des Montageprozesses und der endgültigen Position des Deckels 18 an dem Gehäusekörper 16.

Wie in Figur 6 gezeigt, wird zu Beginn der Deckel 18 auf den Gehäusekörper 16 lose aufgesetzt. Dabei berühren sich die Auflageflächen 62 und 64. Dann wird der Deckel 18 weiter in Richtung zu dem Gehäusekörper 16 gedrückt. Das Drücken erfolgt dabei parallel zu der ersten Erstreckungsrichtung 54, in der sich der Vorsprung 48 erstreckt. Wie in Figur 7 gezeigt, schnäbelt der Vorsprung 48 dabei an der Aufnahme 60 an. Wie in Figur 8 gezeigt, wird der Deckel 18 schließlich weiter in Richtung zu dem Gehäusekörper 16 gedrückt. Dabei wird der Vorsprung 48 tief in die Aufnahme 60 hinein gedrückt und rückt den Deckel 18 in seine seitlichen Positionen und verkrallt sich im Deckel 18 durch Verdrücken der Spitze des Vorsprungs 48, d. h. der Vorsprung 48 wird in der Aufnahme 60 plastisch verformt. Der Vorsprung 48 übernimmt bei der Montage die Führung des Deckels 18 auf den Gehäusekörper 16 und presst den Deckel 18 an die dafür vorgesehenen Flächen. Durch die jeweils drei Auflageflächen 62 und 64 wird eine Dreipunktauflage geschaffen, so dass sich der Deckel 18 nicht mehr relativ zu dem Gehäusekörper 16 um die erste Erstreckungsrichtung 54 drehen kann. In der Endposition kann der Deckel 18 auch nicht mehr zurückspringen bzw. sich verschieben.

## Patentansprüche

1. Sensoranordnung (10) zur Bestimmung wenigstens eines Parameters eines durch einen Kanal (30) strömenden fluiden Mediums, insbesondere eines Ansaugluftmassenstroms einer Brennkraftmaschine, wobei die Sensoranordnung (10) ein Sensorgehäuse (12), das als ein in ein Strömungsrohr einbringbarer Steckfühler ausgebildet ist und in dem der Kanal (30) ausgebildet ist, und mindestens einen in dem Kanal (30) angeordneten Sensorchip (36) zur Bestimmung des Parameters des fluiden Mediums umfasst, wobei das Sensorgehäuse (12) einen Gehäusekörper (16) und einen Deckel (18) aufweist, wobei der Kanal (30) einen Einlass (20) in den Kanal (30), der in einem in das Strömungsrohr eingesetzten Zustand des Steckfühlers einer Hauptströmungsrichtung (22) des fluiden Mediums in dem Strömungsrohr entgegenweist, und mindestens einen Auslass (32) aus dem Kanal (30) aufweist,
**dadurch gekennzeichnet, dass**
der Kanal (30) in dem Deckel (18) ausgebildet ist und der Deckel (18) mit dem Gehäusekörper (16) mittels einer kraftschlüssigen Verbindung verbunden ist, wobei der Deckel (18) eine Aufnahme (60) aufweist, wobei der Gehäusekörper (16) einen Vorsprung (48) aufweist, wobei der Vorsprung (48) zum Ausbilden der kraftschlüssigen Verbindung in die Aufnahme (60) eingreift und wobei der Vorsprung (48) in einer ersten Erstreckungsrichtung (54) von dem Gehäusekörper (16) vorsteht, wobei das Sensorgehäuse (12) weiter einen Elektronikraum (46) aufweist, wobei der Sensorchip (36) auf einem Sensorträger (34) angeordnet ist, der sich von dem Elektronikraum (46) aus in einer zweiten Erstreckungsrichtung (58) in den Kanal (30) hinein erstreckt, wobei der Vorsprung (48) dem Elektronikraum (46) gegenüberliegend mit dem Kanal (30) dazwischen in der zweiten Erstreckungsrichtung (58) angeordnet ist und sich der Vorsprung (48) senkrecht zu der zweiten Erstreckungsrichtung (58) erstreckt.

2. Sensoranordnung (10) nach dem vorhergehenden Anspruch, wobei die kraftschlüssige Verbindung eine Presspassung ist.

3. Sensoranordnung (10) nach Anspruch 1, wobei der Vorsprung (48) eine dreieckige Querschnittsfläche bei einem Querschnitt senkrecht zu der ersten Erstreckungsrichtung (54) gesehen aufweist.

4. Sensoranordnung (10) nach einem der beiden vorhergehenden Ansprüche, wobei der Deckel (18) mindestens eine deckelseitige Auflagefläche (62) aufweist, wobei der Gehäusekörper (16) mindestens eine gehäusekörperseitige Auflagefläche (64) aufweist, wobei sich die deckelseitige Auflagefläche (62) und die gehäusekörperseitige Auflagefläche (64) berühren, wobei ein erster Abstand von dem Vorsprung (48) zu der gehäusekörperseitigen Auflagefläche (64) kleiner ist als ein zweiter Abstand von der Aufnahme zu der deckelseitigen Auflagefläche (62).

5. Sensoranordnung (10) nach dem vorhergehenden Anspruch, wobei der Deckel (18) mindestens drei deckelseitige Auflageflächen (62) aufweist, wobei der Gehäusekörper (16) mindestens drei gehäusekörperseitige Auflageflächen (64) aufweist, wobei jeweils eine deckelseitige Auflagefläche (62) eine gehäusekörperseitige Auflagefläche (64) berührt.

6. Sensoranordnung (10) nach einem der vier vorhergehenden Ansprüche, wobei der Vorsprung (48) in der Aufnahme (60) plastisch verformt ist.

7. Sensoranordnung (10) nach einem der fünf vorhergehenden Ansprüche, wobei der Vorsprung (48) im Wesentlichen senkrecht von dem Gehäusekörper (16) vorsteht.

## Claims

1. Sensor arrangement (10) for determining at least one parameter of a fluid flowing through a duct (30), in particular an intake air mass flow of an internal combustion engine, wherein the sensor arrangement (10) comprises a sensor housing (12) which is embodied as a plug-in probe which can be introduced into a flow pipe and in which the duct (30) is formed, and at least one sensor chip (36) which is arranged in the duct (30) and has the purpose of determining the parameter of the fluid, wherein the sensor housing (12) has a housing body (16) and a cover (18), wherein the duct (30) has an inlet (20) into the duct (30), which inlet (20) points counter to a main flow direction (22) of the fluid in the flow pipe, in a state of the plug-in probe in which it is inserted into the flow pipe, and at least one outlet (32) out of the duct (30),
**characterized in that**
the duct (30) is formed in the cover (18), and the cover (18) is connected to the housing body (16) by means of a frictionally locking connection, wherein the cover (18) has a receptacle (60), wherein the housing body (16) has a projection (48), wherein the projection (48) engages in the receptacle (60) in order to form the frictionally locking connection, and wherein the projection (48) protrudes from the housing body (16) in a first extension direction (54), wherein the sensor housing (12) also has an electronic space (46), wherein the sensor chip (36) is arranged on a sensor carrier (34) which extends into the duct (30) from the electronic space (46) in a second extension direction (58), wherein the projection (48) is arranged opposite the electronic space (46), with the duct (30) between the two in the second extension direction (58), and the projection (48) extends perpendicularly with respect to the second extension direction (58).

2. Sensor arrangement (10) according to the preceding claim, wherein the frictionally locking connection is a press fit.

3. Sensor arrangement (10) according to Claim 1, wherein the projection (48) has a triangular cross-sectional area in the case of a cross-section which is viewed perpendicularly with respect to the first extension direction (54).

4. Sensor arrangement (10) according to one of the two preceding claims, wherein the cover (18) has at least one cover-side bearing face (62), wherein the housing body (16) has at least one housing-body-side bearing face (64), wherein the cover-side bearing face (62) and the housing-body-side bearing face (64) are in contact, wherein a first distance from the projection (48) to the housing-body-side bearing face (64) is shorter than a second distance from the receptacle to the cover-side bearing face (62).

5. Sensor arrangement (10) according the preceding claim, wherein the cover (18) has at least three cover-side bearing faces (62), wherein the housing body (16) has at least three housing-body-side bearing faces (64), wherein in each case one cover-side bearing face (62) is in contact with one housing-body-side bearing face (64).

6. Sensor arrangement (10) according to one of the four preceding claims, wherein the projection (48) in the receptacle (60) is shaped in a plastic fashion.

7. Sensor arrangement (10) according one of the five preceding claims, wherein the projection (48) protrudes essentially perpendicularly from the housing body (16).

## Revendications

1. Système de capteur (10) destiné à déterminer au moins un paramètre d'un milieu fluide s'écoulant à travers un conduit (30), en particulier un débit massique d'air d'admission d'un moteur à combustion interne, dans lequel le système de capteur (10) comprend un boîtier de capteur (12) qui est réalisé sous la forme d'un capteur enfichable pouvant être introduit dans un tube d'écoulement et dans lequel le conduit (30) est conçu, et comprend au moins une puce de capteur (36) disposée dans le conduit (30) pour déterminer le paramètre du milieu fluide, dans lequel le boîtier de capteur (12) comporte un corps de boîtier (16) et un couvercle (18), dans lequel le conduit (30) comporte un orifice d'entrée (20) dans le conduit (30) qui, dans l'état dans lequel le capteur enfichable est inséré dans le tube d'écoulement, est opposé à une direction d'écoulement principale (22) du milieu fluide dans le tube d'écoulement et comporte au moins un orifice de sortie (32) du conduit (30),
**caractérisé en ce que** le conduit (30) est réalisé dans le couvercle (18) et **en ce que** le couvercle (18) est relié au corps de boîtier (16) au moyen d'une liaison à complémentarité de force, dans lequel le couvercle (18) comporte un réceptacle (60), dans lequel le corps de boîtier (16) comporte une protubérance (48), dans lequel la protubérance (48) s'engage dans le réceptacle (60) pour former la liaison par complémentarité de force et dans lequel la protubérance (48) dépasse du corps de boîtier (16) dans une première direction d'extension (54), dans lequel le boîtier de capteur (12) comporte en outre un espace électronique (46), dans lequel la puce de capteur (36) est disposée sur un support de capteur (34) qui s'étend de l'espace électronique (46) jusqu'au conduit (30) dans une deuxième direction d'extension (58), dans lequel la protubérance (48) est disposée en face de l'espace électronique (46), le conduit (30) étant situé entre ceux-ci dans la deuxième direction d'extension (58), et la protubérance (48) s'étend perpendiculairement à la deuxième direction d'extension (58) .

2. Système de capteur (10) selon la revendication précédente, dans lequel la liaison par complémentarité de force est un ajustement serré.

3. Système de capteur (10) selon la revendication 1, dans lequel la protubérance (48) présente une surface de section transversale triangulaire au niveau d'une section transversale perpendiculaire à la première direction d'extension (54).

4. Système de capteur (10) selon l'une des deux revendications précédentes, dans lequel le couvercle (18) présente au moins une surface d'appui côté couvercle (62), dans lequel le corps de boîtier (16) comporte au moins une surface d'appui côté corps de boîtier (64), dans lequel la surface d'appui côté couvercle (62) et la surface d'appui côté corps de boîtier (64) sont en contact, dans lequel une première distance entre la protubérance (48) et la surface d'appui côté corps de boîtier (64) est inférieure à une deuxième distance entre le réceptacle et la surface d'appui côté couvercle (62).

5. Système de capteur (10) selon la revendication précédente, dans lequel le couvercle (18) comporte au moins trois surfaces d'appui côté couvercle (62), dans lequel le corps de boîtier (16) comporte au moins trois surfaces d'appui côté corps de boîtier (64), dans lequel une surface d'appui côté couvercle (62) est respectivement en contact avec une surface d'appui côté corps de boîtier (64).

6. Système de capteur (10) selon l'une des quatre revendications précédentes, **caractérisé en ce que** la protubérance (48) est déformée plastiquement dans le réceptacle (60).

7. Système de capteur (10) selon l'une des cinq revendications précédentes, dans lequel la protubérance (48) fait saillie sensiblement perpendiculairement au corps du boîtier (16).
